Europäisches Patentamt

European Patent Office

Office européen des brevets

(11) Veröffentlichungsnummer: **0 364 547 B1**

## (12) EUROPÄISCHE PATENTSCHRIFT

(45) Veröffentlichungstag der Patentschrift: **22.09.93**

(51) Int. Cl.⁵: **C23C 4/12**, F16C 33/14

(21) Anmeldenummer: **89904012.5**

(22) Anmeldetag: **13.04.89**

(86) Internationale Anmeldenummer:
**PCT/DE89/00219**

(87) Internationale Veröffentlichungsnummer:
**WO 89/10422 (02.11.89 89/26)**

Die Akte enthält technische Angaben, die nach
dem Eingang der Anmeldung eingereicht wurden
und die nicht in dieser Patentschrift enthalten sind.

(54) **SCHICHTWERKSTOFF ODER SCHICHTWERKSTÜCK UND VERFAHREN ZU SEINER HERSTELLUNG.**

(30) Priorität: **23.04.88 DE 3813803**

(43) Veröffentlichungstag der Anmeldung:
**25.04.90 Patentblatt 90/17**

(45) Bekanntmachung des Hinweises auf die
Patenterteilung:
**22.09.93 Patentblatt 93/38**

(84) Benannte Vertragsstaaten:
**AT CH DE FR GB IT LI NL SE**

(56) Entgegenhaltungen:
**WO-A-88/00251      DE-A- 1 521 372**
**DE-A- 3 621 184      DE-B- 2 615 022**
**DE-C- 906 530      FR-A- 2 230 753**
**US-A- 4 297 388**

**PATENT ABSTRACTS OF JAPAN, vol. 3, no.**
**123 (C-61), October 16, 1979; & JP - A - 54**
**103 752**

Römpps Chemie Lexikon, 8. Aufl., Bd. 1, Seite 26

(73) Patentinhaber: **GLYCO-METALL-WERKE Glyco
B.V. & Co. KG
Stielstrasse 11, Postfach 13 03 35
D-65091 Wiesbaden-Schierstein(DE)**

(72) Erfinder: **ENGEL, Ulrich
Breslauer Str. 2a
D-6208 Bad Schwalbach(DE)**
Erfinder: **WEGNER, Karl-Heinz
Hamsterweg 10
D-6208 Bad Schwalbach(DE)**

**Beschreibung**

Die Erfindung bezieht sich auf einen Schichtwerkstoff oder ein Schichtwerkstück mit einer an der einen Oberfläche einer festen Trägerschicht angebrachten Funktionsschicht, insbesondere Gleitschicht, beispielsweise als feste Dispersionsschicht mit einer Matrix mit mindestens einem aufschmelzbaren Bestandteil und Dispersionselementen die zumindest in festem Zustand im Werkstoff der Matrix unlöslich oder nur in geringerer als vorhandener Menge löslich sind, oder aus einem anderen, für tribologische Zwecke anwendbaren Gemenge von nicht oder nur in geringerer als vorhandener Menge ineinander löslichen Bestandteilen. Die Erfindung betrifft auch ein Verfahren zur Herstellung solcher Schichtwerkstoffe und Schichtwerkstücke.

Alle bisher bekannten Schichtwerkstoffe und Schichtwerkstücke dieser Art weisen eine relativ grobe Struktur der als feste Dispersionsschicht ausgebildeten Funktionsschicht auf. Diese grobe Struktur hat aber insbesondere bei Einsatz solcher Schichtwerkstoffe und Schichtwerkstücke für tribologische Zwecke erhebliche Nachteile und Mängel. Insbesondere ist bei diesen bekannten Schichtwerkstoffen und Schichtwerkstücken die Bindung der Funktionsschicht an die Trägerschicht problematisch. Es ist zwar aus DE-OS 26 56 203 bekannt, einen für tribologische Zwecke einsetzbaren Schichtwerkstoff dadurch zu bilden, daß eine zur Entmischung neigende Dispersionslegierung auf einen durch ein Sintergerüst gebildeten Rauhgrund thermokinetisch aufgebracht wird. Wenn - wie bei dieser Vorveröffentlichung beabsichtigt - ein ineinandergreifen von Sintergerüst und Dispersionslegierung unter teilweisem Verschweißen hervorzurufen, ist es erforderlich, das Sintergerüst relativ dick auszubilden, was bei Ausbildung der Funktionsschicht mit geringer Dicke nicht in Betracht kommen kann.

Aus der WO-A-88/00251 ist bekannt, daß Spritzpulverteilchen zwischen 1 μm und 100 μm Durchmesser in einem Plasmastrahl eingeführt und mit hoher Geschwindigkeit auf eine Trägerschicht aufgespritzt werden. Im Plasmastrahl werden diese Teilchen zu wesentlich kleineren Bereichen seiner Materialien aufgeschmolzen, so daß sich nach dem Abscheiden auf der Trägerschicht Kristallite bilden, die deutlich kleiner als 5 μm sind.

In dem Verfahren nach der WO-A-88/00251 wird sorgfältig vermieden, die Trägerschicht bis in den Bereich des Schmelzpunktes zu erhitzen, so daß nur eine beschränkte Diffusion des aufgespritzen Materials in die Trägerschicht möglich ist. Damit ist die erreichbare Bindungsfestigkeit zwischen der Lagermetallschicht und der Trägerschicht begrenzt.

Aufgabe der Erfindung ist es daher, ein Verfahren zum Herstellen eines Schichtwerkstoffes bzw. von Schichtwerkstücken der oben angegebenen Art mit verbesserter Struktur der Funktionsschicht und wesentlich verbesserter Bindung der Funktionsschicht an die Trägerschicht zu schaffen, wobei die Werkstoffauswahl für die Trägerschicht und die Funktionsschicht entsprechend dem jeweiligen Anwendungsfall, insbesondere für tribologische Zwecke freigestellt sein soll und wobei die Herstellung in einem einfach und sicher durchführbaren, keine besonderen Umweltbelastungen hervorrufenden Verfahren unter günstigen Herstellungsbedingungen und mit niedrigen Herstellungskosten möglich sein soll.

Diese Aufgabe wird erfindungsgemäß durch ein Verfahren mit den kennzeichnenden Merkmalen des Patentanspruches 1 bzw. durch einen Schichtwerkstoff gemäß Anspruch 15 gelöst. Die durch Luftplasmaspritzen aus die aufschmelzbaren Matrixbestandteile und die in der Matrix verteilten ungelösten Bestandteile enthaltendem feinem Pulver gebildete Funktionsschicht ist als feste Dispersionsschicht mit einer Matrix ausgebildet, in der die Dispersionselemente als sehr fein verteilte Teilchen aus nicht in dem Matrixwerkstoff löslichen oder in geringerer als vorhandener Menge löslichen Bestandteilen gebildet und direkt oder über eine dünne Haftvermittlerschicht auf der Oberfläche der Trägerschicht gebunden ist, wobei in der (den) Bindungszone(n) zwischen diesen Schichten auftretende spröde Verbindungen zwischen Bestandteilen der Trägerschicht und/oder Haftvermittlerschicht und/oder Bestandteilen der Funktionsschicht nur einen begrenzten Teil der Verbindungsfläche zwischen den Schichten und auch nur kleine begrenzte Bereiche innerhalb der jeweiligen Verbindungsfläche einnehmen.

Durch die Erfindung wird einerseits eine sehr feine Verteilung der Dispersionselemente innerhalb der Matrix der Funktionsschicht erzielt, während andererseits eine wesentlich verbesserte Bindung der Funktionsschicht an die Trägerschicht bzw. eine evtl. zwischen Trägerschicht und Funktionsschicht vorgesehene Haftvermittlerschicht erreicht. Es hat sich herausgestellt, daß diese Vorteile sowohl bei metallischen Funktionsschichten als auch nicht metallischen Funktionsschichten erzielbar sind. Dies gilt sowohl hinsichtlich Bindung auf metallischen Trägerschichten als auch für Bindung auf nicht metallischen Trägerschichten.

Dabei hat es sich überraschend herausgestellt, daß kleine begrenzte Bereiche innerhalb der jeweiligen Verbindungsfläche, in welchen chemische und quasichemische Verbindungen zwischen Bestandteilen der miteinander verbundenen Schichten eingetreten sind, die Bindung zwischen den Schichten wesentlich verbessern. Es entspricht zwar der Erfahrung, daß solche chemische oder quasichemische Verbindungen von Bestandteilen der aneinandergebundenen Schichten für die eigentliche Bindung ausfallen, insbesondere wenn solche chemische oder quasichemische Verbindungen spröde sind. Jedoch sind diese Bereiche chemischer oder quasichemischer Verbindungen von einem Rand umgeben, in welchem verstärkte Diffusion der Bestandteile zwischen den beiden benachbarten Schichten über deren Verbindungsfläche hinweg eingetreten ist. Wenn demzufolge die Bereiche chemischer oder quasichemischer Verbindung innerhalb der Verbindungsfläche klein begrenzt gehalten werden, läßt sich auf diese Weise ein engmaschiges Netz verstärkter Diffusion innerhalb der Verbindungsfläche bilden, das die Bindungsfestigkeit und Bindungssicherheit zwischen den benachbarten Schichten wesentlich erhöht.

Eine weitere wesentliche Verbesserung der Bindung zwischen den im Schichtwerkstoff bzw. in dem Schichtwerkstück benachbarten Schichten läßt sich erreichen, wenn mindestens eine der jeweils an einer Bindungszone beteiligten Schichten unterschiedliche metallische Bestandteile aufweist oder die an einer Bindungszone beteiligten Schichten zueinander unterschiedliche metallische Bestandteile aufweisen und zwar solcher unterschiedlichen metallischen Bestandteile, die exotherm miteinander reagieren, wobei es wiederum darauf ankommt, die durch exotherme Reaktion entstandenen spröden, intermetallischen Verbindungen auf möglichst kleine begrenzte Bereiche innerhalb der jeweiligen Bindungszone zu begrenzen.

Die Haftvermittlerschicht kann im Rahmen der Erfindung durch Luftplasmaspritzen angebracht werden. Es ist aber auch möglich, eine dünne Haftvermittlerschicht in Form eines Rauhgrundes durch eine Lage oder nur wenige Lagen feiner Teilchen auf der zu beschichtenden Oberfläche der Trägerschicht aufzusintern.

Die Haftvermittlerschicht kann insbesondere zur Bindung von Schichten metallischer Werkstoffe metallische Bestandteile enthalten, die untereinander und/oder mit metallischen Bestandteilen der Trägerschicht und/oder metallischen Bestandteilen der Funktionsschicht exotherm reagieren. Es kommen hierzu Haftvermittlerschichten in Betracht, die aus Molybdän und/oder Nickel-Aluminid- und/oder Nickel/Chrom-Legierung und/oder Nickel/Kupfer und/oder Reinaluminium und/oder Aluminiumlegierung, beispielsweise AlSi8, enthält.

Eine bevorzugte Anwendungsmöglichkeit der Erfindung besteht darin, daß die Trägerschicht den Rücken und die Funktionsschicht die Gleitschicht von Zweischicht-Gleitlagern bilden, wobei die Trägerschicht aus Stahl, vorzugsweise beruhigtem Stahl, oder Aluminiumlegierung und die Funktionsschicht aus einer Dispersionslegierung bestehen, deren Matrix mindestens einen der folgenden metallischen Bestandteile: Aluminium, Kupfer, Zink und deren Dispersionselemente mindestens einen der folgenden Bestandteile: Blei, Zinn, Wismut, Molybdän, Molybdändisulfid (bevorzugt mit Metall umhüllt), Bornitrid, Kohlenstoff (vorzugsweise in Form von mit Metall, wie Nickel, Kupfer oder Aluminium umhüllten Graphitteilchen), für tribologische Zwecke anwendbare Kunststoffe, wie beispielsweise Polyester, PTFE, PEK, PEEK, aufweisen.

Besonders vorteilhaft ist die Erfindung in Verbindung mit Gleitlagern, deren Funktionsschicht eine metallische Matrix auf Aluminiumbasis oder Kupferbasis und als Dispersionselemente in sehr feiner Verteilung in die Matrix eingelagerte Bleiteilchen in einem Gewichtsanteil zwischen 6% und 40%, vorzugsweise zwischen 6% und 15%, der Funktionsschicht aufweist.

Eine weitere Verbesserung der erfindungsgemäßen Funktionsschicht ohne nachteiligen Einfluß auf die Bindung der funktionsschicht an die Haftvermittlerschicht bzw. die Trägerschicht läßt sich im Rahmen der Erfindung dadurch erreichen, daß zusätzlich Hartteilchen in Größe zwischen etwa 10 μm und 200 μm in die Matrix der Funktionsschicht eingelagert sind. Diese Hartteilchen können bevorzugt auf der Basis von Laves-Phasern (AB$_2$), vorzugsweise vom Typ MgCu$_2$ oder vom Typ MgZn$_2$ oder MgNi$_2$, sein, wobei das Radius-Verhältnis der A-Atome und B-Atome

$$r_A/r_B = 1{,}225$$

beträgt.

Es ist jedoch auch möglich, daß die zusätzliche in die Matrix eingelagerten Hartteilchen solche aus der Gruppe der Stoffe TiC, WC, Glasmehl, Si$_3$N$_4$, SiC, Al$_2$O$_3$ sind.

Für die Herstellung des erfindungsgemäßen Schichtwerkstoffes bzw. der erfindungsgemäßen Schichtwerkstücke ist von einem Verfahren auszugehen, wie es bereits in DE-OS 26 56 203 angeführt wird, bei welchem die Funktionsschicht als metallische Dispersionslegierung oder mit anderem für tribologische Zwecke anwendbarem Gefüge durch Luftplasmaspritzen aus feinem Pulver gebildet wird, das die für die Bildung der Funktionsschicht vorgesehenen Bestandteile enthält.

Beim erfindungsgemäßen Verfahren wird die Funktionsschicht als Dispersionslegierung oder mit anderer für tribologische Zwecke anwendbarer Struktur durch Luftplasmaspritzen direkt auf die Oberfläche der Trägerschicht oder auf eine vorher gebildete, dünne Haftvermittlerschicht aufgetragen. Dabei wird der Abstand der Plasmaflamme von der zu beschichtenden Oberfläche der Trägerschicht oder Haftvermittlerschicht in Abstimmung mit der verfügbaren Anlagen-Leistung und mit der Art des jeweils verarbeiteten Pulvers so groß eingestellt und während des Spritzvorganges gehalten, daß ein Erhitzen der Trägerschicht bzw. Haftvermittlerschicht an der zu beschichtenden Oberfläche in der Nähe der Reaktionstemperatur zwischen Bestandteilen der Trägerschicht bzw. Haftvermittlerschicht und Bestandteilen der Funktionsschicht sowie Bestandteilen der umgebenden Stoffe auf eine Tiefe in der Größenordnung von nur wenigen Atomlagen bzw. Moleküllagen der Schichten eintritt. Bei und/oder sofort nach dem Luftplasmaspritzen werden die Schichten von der Trägerschichtseite her gekühlt und dabei eine hohe, im Hinblick auf die Schrumpfungseigenschaften der Trägerschicht, der Haftvermittlerschicht und der gebildeten Funktionsschicht und deren gegenseitigen Bindungszonen noch zulässigen Kühlrate von beispielsweise $10^2$ K/s eingehalten. Durch das rasche Abkühlen während des Luftplasmaspritzens und/oder sofort nach dem Luftplasmaspritzen wird die Funktionsschicht mit der bei Luftplasmaspritzen erzeugten, sehr feinen Verteilung der Dispersionselemente in der Matrix eingefroren. Außerdem werden die durch exotherme Reaktionen gebildeten chemischen und quasichemischen Verbindungen in der Bindungszone durch das schnell einsetzende wirkungsvolle Kühlen gehemmt, so daß die Entstehung solcher chemischen und quasichemischen Verbindungen auf eine Vielzahl kleiner Bereiche der Verbindungsfläche beschränkt bleibt, wodurch ein sehr engmaschiges Netz verstärkter Diffusionsbereiche ausgebildet wird.

Die Funktionsschicht kann im Rahmen der Erfindung durch Luftplasmaspritzen aus einem Pulvergemenge gebildet werden, das die aufschmelzbaren Matrixbestandteile und die in der Matrix zu verteilenden, in deren Werkstoff unlöslichen oder nur in geringerer als vorhandener Menge löslichen Bestandteile enthält. Man kann im erfindungsgemäßen Verfahren auch stattdessen oder zusätzlich die Funktionsschicht durch Luftplasmaspritzen aus mit oder ohne organische Binder agglomeriertem Pulver (Mikropellets) bilden, wobei auch dieses agglomerierte Pulver die aufschmelzbaren Matrixbestandteile und die in der Matrix zu verteilenden, in deren Werkstoff löslichen oder nur in geringerer als vorhandener Menge löslichen Bestandteile enthalten soll. Das benutze Pulvergemenge oder Pulveragglomerat kann Pulverteilchen mit Umhüllung durch zusätzliche Stoffe enthalten. Solche Umhüllung kann beispielsweise mittels Kleber auf den Pulverteilchen angebracht sein. Das zu verarbeitende Pulver kann an einer einzigen Stelle der Plasmaflamme zugeführt werden. Es ist aber auch möglich, unterschiedliche Pulver gleichzeitig zu verarbeiten und ggf. an getrennten Stellen der Plasmaflamme zuführen.

Zusätzlich zu dem in der Matrix zu verteilenden Dispersionselementen können auch noch Hartteilchen mit Größe zwischen etwa 10 $\mu$m und 200 $\mu$m in die Funktionsschicht eingelagert werden. Diese einzulagernden Hartteilchen werden im erfindungsgemäßen Verfahren vorzugsweise ebenfalls in die Plasmaflamme eingeführt. Es kommen hierzu Hartteilchen in Betracht, die aus einem oder mehreren Stoffe aus der Gruppe TiC, WC, Glasmehl, $Si_3N_4$, SiC, $Al_2O_3$ bestehen. Stattdessen oder zusätzlich kommen auch Hartteilchen auf der Basis von Laves-Phasen ($AB_2$). vorzugsweise vom Typ $MgCu_2$ oder vom Typ $MgZn_2$ oder $MgNi_2$ in Betracht, wobei das Radius-Verhältnis der A-Atome und B-Atome

$$r_A/r_B = 1,225$$

beträgt.

Im Rahmen der Erfindung kann die Funktionsschicht aus Dispersionslegierung mit metallischer Matrix aus einem oder mehreren der Metalle: Aluminium, Kupfer, Zink, Silber und Dispersionselementen aus einem oder mehreren der Bestandteile: Blei, Zinn, Wismut, Nickel, Kupfer, Mangan, Silicium, Kohlenstoff (vorzugsweise in Form von mit Metall, wie Nickel, Aluminium, Kupfer, umhüllten Graphitteilchen), Molybdändisulfid (vorzugsweise umhüllt mit Metall wie Nickel, Aluminium, Kupfer), Bornitrid, für tribologische Zwecke anwendbaren Kunststoffen, wie beispielsweise Polyester, PTFE, PEK, PEEK auf eine Eisen enthaltende Trägerschicht, vorzugsweise einer Trägerschicht aus beruhigtem Stahl durch Luftplasmaspritzen aufgebracht werden, wobei das Kühlen mit einer Kühlrate zwischen $10^2$ K/s bis $5 \cdot 10^2$ K/s vorgenommen wird.

Falls eine dünne Haftvermittlerschicht zwischen der Trägerschicht und der Funktionsschicht erwünscht oder erforderlich ist, kann diese in Art eines Rauhgrundes als eine oder mehrere Lage feiner Teilchen auf die zu beschichtende Oberfläche der Trägerschicht vor dem Aufbringen der Funktionsschicht aufgesintert werden. Es ist aber auch möglich eine dünne Haftvermittlerschicht vor dem Aufbringen der Funktionsschicht durch Luftplasmaspritzen auf der mit der Funktionsschicht zu belegenden Oberfläche der Trägerschicht aufzubringen und dabei und/oder unmittelbar anschließend eine Kühlung unter Einhaltung einer Kühlrate von mindestens $0,2 \cdot 10^3$ K/s vorzunehmen.

In beiden Fällen kann eine Haftvermittlerschicht aufgebracht werden, die metallische Bestandteile enthält, die untereinander und/oder mit metallischen Bestandteilen der danach aufzubringenden Funktionsschicht exotherm reagieren. Hierzu kommen in Betracht die Haftvermittlerschicht aus einem oder mehreren der folgenden Stoffe zu bilden:

Molybdän, Nickel/Aluminium-Legierung, Nickel/Chrom-Legierung, Nickel/Kupfer-Legierung, Reinaluminium, Aluminiumlegierung, beispielsweise AlSi8. Wenn Nickel/Aluminium-Legierung oder Nickel/Chrom-Legierung oder Nickel/Kupfer-Legierung für die Bildung der Haftvermittlerschicht benutzt wird, kommt es schon bei der Bildung der Haftvermittlerschicht entweder durch Sintern oder durch Luftplasmaspritzen zum Einsetzen der exothermen Reaktion unter Bildung von intermetallischen Verbindungen, beispielsweise Nickel-Aluminid. Die exotherme Reaktion zur Bildung intermetallischer Legierungen tritt aber auch mit metallischen Bestandteile in Trägerschicht beim Aufbringen der Haftvermittlerschicht ein. Andererseits ist nach Bildung der Haftvermittlerschicht auch noch ausreichende Reaktionskapazität vorhanden, um exotherme Reaktion chemischer oder quasichemischer Art mit metallischen Bestandteilen der Funktionsschicht einzuleiten, wenn diese durch Luftplasmaspritzen aufgebracht wird.

Um den gewünschten begrenzten Ablauf exothermer Reaktionen chemischer oder quasichemischer Art und die Ausbildung einer feinen Struktur in der Dispersion der Funktionsschicht zu beherrschen, empfiehlt es sich, hochwirksame Kühlung während und/oder sofort anschließend an das Beschichten durch Luftplasmaspritzen auszuführen. Dies kann mittels Kühlwalzen vorgenommen werden, mit denen die Trägerschicht des Schichtwerkstoffs bzw. des Schichtwerkstücks in wärmeleitender Berührung zu halten ist. Eine noch stärkere Kühlung läßt sich erreichen, wenn die Trägerschicht an der nicht beschichteten Seite mit flüssigem oder gasförmigem Kühlmedium in Berührung gebracht wird. Zusätzlich kann auch noch gasförmiges Kühlmedium auf die frisch gebildete Funktionsschicht geführt werden.

Ausführungsbeispiele der Erfindung werden im folgenden anhand der Zeichnung näher erläutert. Es zeigen:

Fig. 1    eine schliffbildartige Teilschnittdarstellung einer ersten Ausführungsform des erfindungsgemäßen Schichtwerkstoffs;

Fig. 2    eine schliffbildartige Teilschnittdarstellung einer zweiten Ausführungsform des erfindungsgemäßen Schichtwerkstoffs;

Fig. 3    die schematische Darstellung einer ersten Ausführungsform des erfindungsgemäßen Verfahrens und

Fig. 4    das Schema einer zweiten Ausführungsform des erfindungsgemäßen Verfahrens.

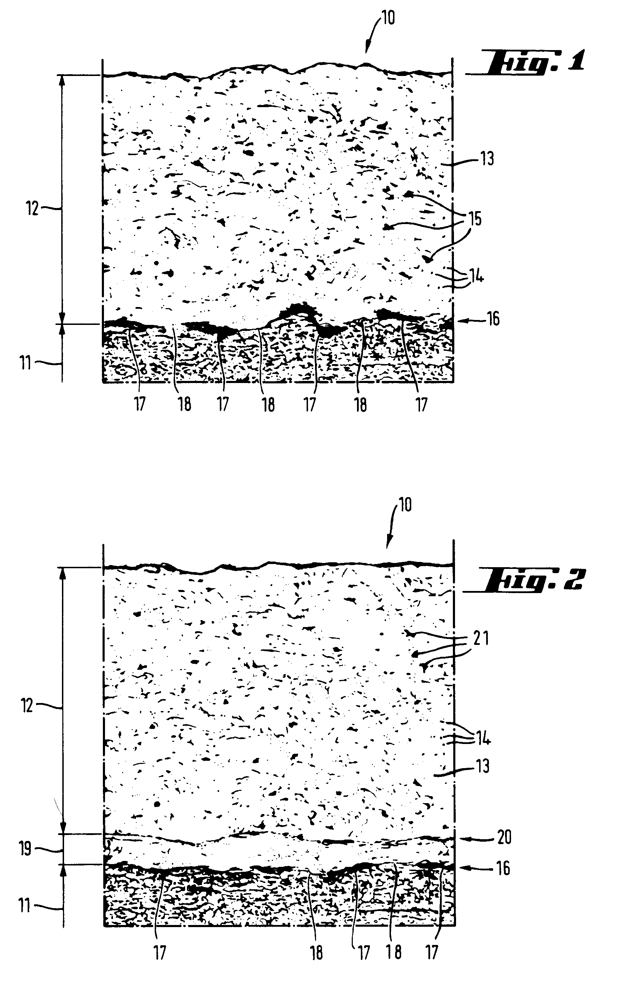

Im Beispiel der Figur 1 ist der Schichtwerkstoff 10 für die Herstellung von tribologischen Elementen, insbesondere Gleitlagern, vorgesehen Dementsprechend weist der Schichtwerkstoff 10 eine Trägerschicht 11 aus beruhigtem Stahl auf, die nach der Verarbeitung den Stahlrücken der aus dem Schichtwerkstoff 10 hergestellten Gleitlager bildet. Auf der Trägerschicht 11 ist eine Funktionsschicht 12 gebildet, die bei den aus dem Schichtwerkstoff 10 hergestellten Gleitlagern die Gleitschicht bildet. Die Funktionsschicht 12 besteht im Beispiel der Figur 1 aus Aluminium/Blei-Dispersionslegierung, beispielsweise mit einem Bleigehalt bei 15 Gew.-%, Dementsprechend weist die Funktionsschicht eine Matrix 13 aus Aluminium und innerhalb dieser Matrix 13 in feindisperser Verteilung Bleiteilchen 14 auf. Ferner sind in die Matrix 13 Hartteilchen 15 in Form von Wiskern aus Laves-Phasen mit einer Größe von etwa 25 $\mu$m eingelagert.

Bei diesem Aufbau weist die Funktionsschicht 12 eine Härte von etwa 75 HV auf.

In der Bindungszone 16 zwischen der Trägerschicht 11 und der Funktionsschicht 12 sind kleine begrenzte Bereich 17 mit intermetallischen Verbindungen von Eisen und Aluminium dadurch gebildet, daß beim Aufbringen der Funktionsschicht 12 durch Luftplasmaspritzen die Oberfläche der Trägerschicht 11 bis an die Reaktionstemperatur zwischen Eisen und Aluminium heran erhitzt wurde, so daß auf die Tiefe einiger Atomlagen chemische Umwandlung zwischen Eisen und Aluminium unter Bildung intermetallischer Eisen-Aluminium-Phasen aufgetreten ist. Zwar wird das Auftreten solcher intermetallischer Eisen-Aluminium-Phasen insbesondere die Ausbildung von sprödem $Fe_2Al_5$ bisher für die Bindungsfestigkeit als schädlich angesehen. Jedoch sind diese intermetallische Verbindungen von Aluminium und Eisen enthaltende Bereiche 17 sehr klein und eng begrenzt, so daß nachteilige Einwirkung auf die Bindungsfestigkeit noch nicht merklich eintritt. Unmittelbar benachbart zu diesen kleinen, begrenzten Bereichen 17 sind Bereiche 18 in der Bindungszone 16 ausgebildet, in denen der Matrixwerkstoff, d.h. Aluminium in den Werkstoff der Trägerschicht 11 diffundiert ist. In diesen Diffusionsbereichen 18 besteht besonders feste und sichere Bindung zwischen der Matrix 13 der Funktionsschicht 12 und dem Stahlgefüge der Trägerschicht 11.

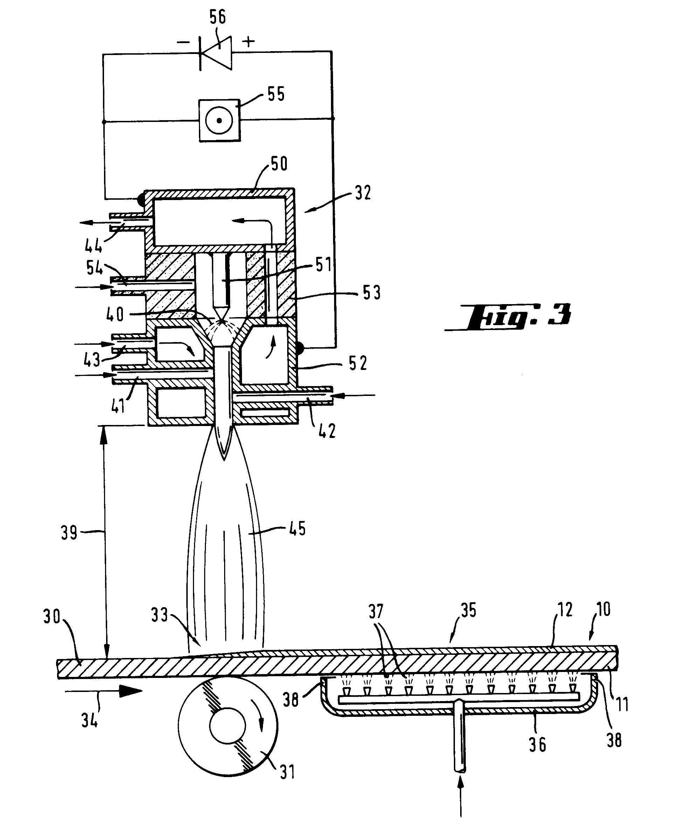

Im Beispiel der Figur 2 handelt es sich ebenfalls um Schichtwerkstoff 10, der für die Herstellung von tribologischen Elementen, insbesondere Gleitlagern, vorgesehen ist. In diesem Beispiel weist der Schichtwerkstoff 10 zwischen seiner Trägerschicht 11 aus Stahl und seiner aus Aluminium/Blei-Dispersionslegierung gebildeten Funktionsschicht 12 eine Haftvermittlerschicht 19 aus Aluminiumlegierung, nämlich AlSi8 mit einer Dicke von etwa 15 $\mu$m auf. Diese Haftvermittlerschicht 19 ist bevorzugt durch Luftplasmaspritzen auf der Trägerschicht 11 angebracht. Hierbei ist wiederum die Plasmaflamme derart eingestellt worden, daß die Oberfläche der Trägerschicht bis nahe an die Reaktionstemperatur mit Aluminium heran erhitzt wurde. Es sind deshalb wieder kleine engbegrenzte Bereiche 17 von intermetallischen Eisen-Aluminium-Phasen und diesen Bereichen 17 benachbarte Diffusionsbereiche 18 entstanden, in welchen das Aluminium der Haftvermittlerschicht 19 in den Stahl der Trägerschicht 11 diffundiert ist. Während die kleinen begrenzten Bereiche 17, die bisher als die Anfänge für die Zerstörung der Bindung angesehen werden, keine merkliche Verschlechterung in der Bindung zwischen der Haftvermittlerschicht 19 und der Trägerschicht 11 hervorrufen, bewirken die den Bereich 17 benachbarten Diffusionsbereiche 18 eine erhebliche Bindungsverstärkung. Im Hinblick auf diese Bindungsverstärkung in den Diffusionsbereichen 18 sind die für die Erzielung der Diffusionsbereiche 18 unvermeidlichen kleinen Bereiche 17 intermetallischer Eisen/Aluminium-Phasen in Kauf genommen.

Auf der Haftvermittlerschicht 19 ist die Funktionsschicht 12 durch Luftplasmaspritzen aufgebaut. Dabei wurde die Plasmaflamme so eingestellt, daß die Haftvermittlerschicht 19 an der zu beschichtenden Oberfläche auf eine Temperatur nahe ihrer Schmelztemperatur erhitzt wurde. die mit der Plasmaflamme unter hoher Geschwindigkeit herangebrachten, für den Aufbau der Funktionsschicht 12 benutzten Pulverteilchen konnten deshalb aufgrund ihrer kinetischen Energie ein örtliches Aufschmelzen an der Oberfläche der Haftvermittlerschicht 19 hervorrufen und dadurch eine intensive Diffusionsverbindung zwischen der Haftvermittlerschicht 19 und der Matrix 13 der Funktionsschicht 12 in der zwischen der Haftvermittlerschicht und der Funktionsschicht 12 liegenden zweiten Bindungszone 20 bewirken.

Wie im Beispiel der Figur 1 sind die Matrix 13 der Funktionsschicht 12 Bleiteilchen 14 feindispers eingelagert. In Abwandlung zum Beispiel der Figur 1 sind die zusätzlich In die Matrix 13 eingelagerten Hartteilchen 21 Aluminiumoxidteilchen mit einer Größe von etwa 5 um bis 10 $\mu$m. Diese Hartteilchen 21 wurden dem für den Aufbau der Funktionsschicht 12 vorgesehenen Werkstoffpulver beigemischt. Weitere Aluminiumoxidteilchen, die in Figur 2 jedoch nicht sichtbar sind, wurden dadurch entwickelt, daß beim Plasmaspritzen die Abstimmung des Plasmagases und des Massestroms von Werkstoffpulver derart abgestimmt wurden, daß eine begrenzte Oxidation von Aluminium am Rand der Plasmaflamme durch den Luftsauerstoff hervorgerufen wurde. Die dabei entstandenen Aluminiumoxidteilchen sind jedoch so klein, daß sie in der Darstellung der Figur 2 nicht in Erscheinung treten. Sie äußern sich jedoch in der Härte der Funktionsschicht 12. Im dargestellten Beispiel konnte die Funktionsschicht 12 auf etwa 60 HV eingestellt werden.

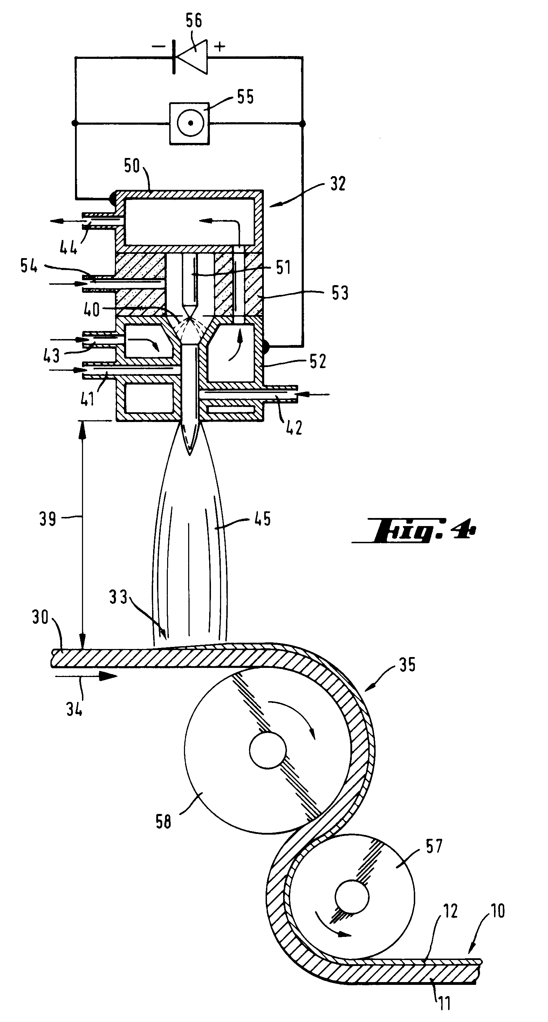

Figur 3 zeigt ein Schema für ein Herstellungsverfahren für den in den Figuren 1 und 2 dargestellten Schichtwerkstoff 10. Nach dieser Verfahrensvariante wird ein Stahlband 30, das die spätere Trägerschicht 11 des Schichtwerkstoffs 10 bilden soll, über eine Stützrolle 31 an einem Plasmabrenner 32 vorbeigezogen. Es wird so in dem dem Plasmabrenner 32 zugewandten Teil des Stahlbandes 30 ein Beschichtungsbereich 33 gebildet. In der durch den Pfeil 34 angedeuteten Wanderrichtung des Stahlbandes 30 unmittelbar hinter dem Beschichtungsbereich 33 ist ein Kühlbereich 35 gebildet. In diesem Kühlbereich 35 wird das Stahlband mit seiner unbeschichteten Seite an einem Kühlkasten 36 vorbeigeführt, in dessen Inneren Strahlen 37 von Kühlgas, beispielsweise Kohlendioxid, eventuell vermischt mit Trockeneis, oder Strahlen von Kühlflüssigkeit, beispielsweise Wasser oder Öl, gegen die nicht beschichtete Oberfläche des Stahlbandes 30 gerichtet sind. Bevorzugt ist die räumliche Anordnung derart getroffen, daß das Stahlband 30 unterhalb des Plasmabrenners 32 horizontal vorbeigeführt und dabei an der Oberseite beschichtet wird, während der Kühlkasten 36 der Unterseite des Stahlbandes 30 gegenübergestellt ist. Zur Erhöhung der Kühlwirkung und zum Auffangen von Kühlflüssigkeit ist im dargestellten Beispiel der Kühlkasten an seinem Umfang mit gegen die Unterseite des Stahlbandes 30 vorgezogenen streifenförmigen Umfangswandteilen 38 ausgebildet.

Der Abstand 39 des Plasmabrenners 32 ist einstellbar und im dargestellten Beispiel derart eingerichtet, daß die dem Plasmabrenner 32 zugewandte Oberfläche des Stahlbandes 30 durch die Plasmaflamme 45 bis in die Nähe der Reaktionstemperatur mit dem für die Bildung der Matrix der Funktionsschicht 12 vorgesehenen metallischen Bestandteil des pulverförmigen Beschichtungswerkstoffs erhitzt wird, beispielsweise bis in die Nähe der Reaktionstemperatur mit Aluminium.

Im Beispiel der Figur 3 ist der Plasmabrenner 32 mit einem Elektrodenteil 50 mit Kathode 51 und einem die Anode bildenden Düsenteil 52 ausgestattet. Zwischen dem Elektrodenteil 50 und dem Düsenteil 52 ist ein Isolationsteil 53 eingesetzt, der den Einlaß 54 für das Plasmagas enthält. Der Elektrodenteil 50 und der Düsenteil 52 sind an einen elektrischen Hochspannungserzeuger angeschlossen, der einen Hochfrequenz-Hochspannungsgenerator 55 und einen Hochspannungsgleichrichter 56 enthält. Mit der so erzeugten elektrischen Hochspannung wird zwischen der Kathode 51 und dem Düsenteil 52 ein Lichtbogen 40 gezündet, durch den das bei 54 eingeführte Plasmagas hindurchgeführt wird und auf diese Weise die aus dem Düsenteil 52 austretende und auf das zu beschichtende Stahlband 30 gerichtete Plasmaflamme 45 bildet. Innerhalb des Düsenteiles 52 wird bei 41 das für die Bildung der Funktionsschicht 12 vorgesehene feine Werkstoffpulver eingeführt. Es kann sich hierbei um ein Pulvergemenge handeln oder auch um ein feines Pulveragglomerat, in welchem die für die Bildung der Funktionsschicht vorgesehenen Bestandteile vereinigt sind. Es ist aber auch möglich, der Plasmaflamme unterschiedliche Pulver zuzuführen, und zwar Pulver der einen Art bei 41 und Pulver einer zweiten Art bei 42. Beispielsweise können auch in diese zweite Zuführung 42 die Hartteilchen eingeführt werden, die in die zu bildende Funktionsschicht eingelagert werden sollen.

Wie durch den Einlaß 43 und den Auslaß 44 angedeutet, wird der Plasmabrenner 32 mit Wasser gekühlt.

Die in Figur 4 wiedergegebene Verfahrensvariante unterscheidet sich von derjenigen gemäß Figur 3 in der Art der benutzten Kühleinrichtungen. Auch in diesem Beispiel wird ein zu beschichtendes Stahlband 30 im Sinne des Pfeiles 34 in einem Abstand 39 unter einem Plasmabrenner 32 vorbeibewegt, so daß an der Oberseite des Stahlbandes 30 ein dem Plasmabrenner 32 gegenüberliegender Beschichtungsbereich 33 gebildet wird, in welchem das Stahlband an seiner zu beschichtenden Oberfläche unter dem Einfluß der Plasmaflamme 45 ist. Vom Beschichtungsbereich 33 läuft das beschichtete Stahlband 30 direkt in den Kühlbereich 35. Dort wird das beschichtete Stahlband 30 bzw. der so gebildete Schichtwerkstoff 10 unter Benutzung einer Umlenkrolle 57 mit seiner unbeschichteten Oberfläche über eine gekühlte Walze 58 gezogen. Diese Kühlwalze 58 kann beispielsweise mit Wasser oder sonstigem Kühlmedium gekühlt sein. Auch mit dieser Kühleinrichtung läßt sich ein intensives Kühlen des durch Luftplasmaspritzen erzeugten Schichtwerkstoffs 10 erreichen, wobei evtl. in der in Figur 3 angedeuteten Verfahrensweise etwas höhere Kühlrate erreichbar ist. In jedem Fall wird aber bei beiden Verfahrensvarianten eine feindisperse Verteilung der in der Matrix ungelösten Bestandteile der Funktionsschicht 12 und eine sichere Bindung der Funktionsschicht 12 auf der Trägerschicht 11 gewährleistet.

**Patentansprüche**

1. Verfahren zum Herstellen von Schichtwerkstoff oder Schichtwerkstücken, bei welchem die Funktionsschicht aus metallischer Dispersionslegierung oder mit anderer für tribologische Zwecke anwendbarer Struktur durch Luftplasmaspritzen aus feinem Pulver gebildet wird, wobei die Funktionsschicht als Dispersionslegierung oder mit anderer für tribologische Zwecke anwendbarer Struktur im Luftplasmaspritzen direkt auf die Oberfläche der Trägerschicht oder auf eine vorher gebildete Haftvermittlerschicht aufgetragen wird, und wobei sofort nach dem Luftplasmaspritzen die Schichten von der Trägerschichtseite her gekühlt werden und dabei eine hohe, im Hinblick auf die Schrumpfungseigenschaften der Trägerschicht, der Haftvermittlerschicht und der gebildeten Funktionsschicht und deren gegenseitigen Bindungszonen noch zulässigen Kühlrate eingehalten wird, dadurch gekennzeichnet, daß der Abstand der Plasmaflamme von der zu beschichtenden Oberfläche der Trägerschicht oder Haftvermittlerschicht in Abstimmung mit der verfügbaren Anlagen-Leistung und mit der Art des jeweils zu verarbeitenden Pulvers so groß eingestellt und während des Spritzvorganges gehalten wird, daß die Trägerschicht bzw. Haftvermittlerschicht an der zu beschichtenden Oberfläche auf eine Tiefe in der Größenordnung von nur wenigen Atomlagen bzw. Moleküllagen der Schichten soweit aufgeheizt wird, daß die zugeführte thermische Energie und die beim Aufprall der im Plasmastrahl mitgeführten Teilchen freigesetzte Energie ein örtliches Aufschmelzen an der Oberfläche der Träger- bzw. Haftvermittlerschicht bewirken, so daß eng begrenzte Bereiche (17) spröder Verbindungen entstehen, die umgeben sind von Bereichen (16) verstärkter Diffusion der im Plasmastrahl mitgeführten Teilchen in die obersten Atom- bzw. Moleküllagen der Träger- bzw. Haftvermittlerschicht.

2. Verfahren nach Anspruch 1, dadurch gekennzeichnet, daß die Funktionsschicht durch Luftplasmaspritzen aus einem Pulvergemenge gebildet wird, das die aufschmelzbaren Matrixbestandteile und die in der Matrix zu verteilenden, in deren Werkstoff unlöslichen oder nur in geringerer als vorhandener Menge löslichen Bestandteilen enthält.

3. Verfahren nach Anspruch 1 oder 2, dadurch gekennzeichnet, daß die Funktionsschicht durch Luftplasmaspritzen aus mit oder ohne organische Binder agglomeriertem Pulver (Mikropellets) gebildet wird, daß die aufschmelzbaren Matrixbestadteile und die in der Matrix zu verteilenden, in deren Werkstoff unlöslichen oder nur in geringerer als vorhandener Menge löslichen Bestandteile enthält.

4. Verfahren nach Anspruch 2 oder 3, dadurch gekennzeichnet, daß das Pulvergemenge oder Pulveragglomerat mit Umhüllung versehene Pulverteilchen enthält.

5. Verfahren nach einem der Ansprüche 1 bis 4, dadurch gekennzeichnet, daß der Plasmaflamme Pulver unterschiedlicher Art ggf. an getrennten Stellen zugeführt werden.

6. Verfahren nach einem der Ansprüche 1 bis 5, dadurch gekennzeichnet, daß der Plasmaflamme zusätzlich Hartteilchen mit Größe zwischen etwa 10 $\mu$m und 200 $\mu$m zur Einlagerung in die zu bildende Funktionsschicht zugeführt werden, und zwar Hartteilchen aus einem oder mehreren der Stoffe aus der Gruppe TiC, WC, Glasmehl, $Si_3N_4$, SiC, $Al_2O_3$ und/oder Hartteilchen auf der Basis von Laves-Phasen ($AB_2$) wobei das Radius-Verhältnis der A-Atome und B-Atome

$$r_A/r_B = 1,225$$

beträgt.

7. Verfahren nach einem der Ansprüche 1 bis 6, dadurch gekennzeichnet, daß die Funktionsschicht aus Dispersionslegierung mit metallischer Matrix aus einem oder mehreren der Metalle: Aluminium, Kupfer, Zink, Silber und Dispersionselementen aus einem oder mehreren der Bestandteile Blei, Zinn, Wismut Nickel, Kupfer, Mangan, Silicium, Kohlenstoff, Molybdänsulfid, Bornitrid, für tribologische Zwecke anwendbare Kunststoffe, auf eine Eisen enthaltende Trägerschicht durch Luftplasmaspritzen aufgebracht wird und dabei das Kühlen mit einer Kühlrate zwischen $10^2$ K/s bis $5 \cdot 10^2$ K/s vorgenommen wird.

8. Verfahren nach einem der Ansprüche 1 bis 7, dadurch gekennzeichnet, daß eine Haftvermittlerschicht in Art eines Rauhgrundes als eine oder wenige Lagen feiner Teilchen auf die zu beschichtende Oberfläche der Trägerschicht vor dem Aufbringen der Funktionsschicht aufgesintert wird.

9. Verfahren nach einem der Ansprüche 1 bis 7, dadurch gekennzeichnet, daß zunächst eine Haftvermittlerschicht durch Luftplasmaspritzen auf der mit der Funktionsschicht zu belegenden Oberfläche der Trägerschicht angebracht und dabei und/oder unmittelbar anschließend eine Kühlung unter Einhaltung einer Kühlrate von mindestens $0,2 \cdot 10^3$ K/s vorgenommen wird.

10. Verfahren nach Anspruch 8 oder 9, dadurch gekennzeichnet, daß eine Haftvermittlerschicht angebracht wird, die metallische Bestandteile enthält, welche untereinander und/oder mit metallischen Bestandteilen der Trägerschicht und/oder mit metallischen Bestandteilen der danach aufzubringen Funktionsschicht exotherm reagieren.

11. Verfahren nach Anspruch 10, dadurch gekennzeichnet, daß eine Haftvermittlerschicht aus einem oder mehreren der folgenden Stoffe angebracht wird: Molybdän, Nickel/Aluminium-Legierung, Nickel/Chrom-Legierung, Nickel/Kupfer-Legierung, Reinaluminium, Aluminiumlegierung.

12. Verfahren nach einem der Ansprüche 1 bis 11, dadurch gekennzeichnet, daß ein die Trägerschicht bildendes Band fortlaufend mit der Funktionsschicht belegt und während und/oder sofort anschließend an das Beschichten durch Luftplasmaspritzen mit seiner unbelegten Seite unter Aufrechterhaltung wärmeleitender Berührung über eine Kühlwalze gezogen wird.

13. Verfahren nach einem der Ansprüche 1 bis 11, dadurch gekennzeichnet, daß ein die Trägerschicht bildendes Band fortlaufend durch Luftplasmaspritzen mit der Funktionsschicht belegt und während und/oder sofort anschließend an das Beschichten mit seiner unbelegten Seite über einen Kühlkasten gezogen wird, in welchem Kühlmedium flüssiger und/oder gasförmiger Art auf die unbelegte Oberfläche der Trägerschicht geführt wird.

14. Verfahren nach Anspruch 12 oder 13 dadurch gekennzeichnet, daß zusätzlich gasförmiges Kühlmedium auf die frisch gebildete Funktionsschicht geführt wird.

15. Schichtwerkstoff oder Schichtwerkstück erhältlich durch das Verfahren nach einem der Ansprüche 1 bis 14 mit einer an der einen Oberfläche einer festen Trägerschicht angebrachten Funktionsschicht, insbesondere Gleitschicht, beispielsweise als feste Dispersionsschicht mit einer Matrix mit mindestens einem aufschmelzbaren Bestandteil und Dispersionselementen die zumindest in festem Zustand im Werkstoff der Matrix unlöslich oder nur in geringerer als vorhandener Menge löslich sind, oder aus einem anderen für tribologische Zwecke anwendbarere Gemenge von nicht oder nur in geringerer als vorhandener Menge ineinander löslichen Bestandteilen, dadurch gekennzeichnet, daß die durch Luftplasmaspritzen aus die aufschmelzbaren Matrixbestandteile und die in der Matrix verteilten, ungelösten Bestandteile enthaltendem, feinem Pulver gebildete Funktionsschicht (12) mit einer Matrix (13) ausgebildet ist, in der die Dispersionselemente als sehr fein verteilte Teilchen (14) aus nicht in dem Matrixwerkstoff löslichen oder in geringerer als vorhandener Menge löslichen Bestandteilen gebildet und direkt oder über eine Haftvermittlerschicht (19) auf der Oberfläche der Trägerschicht (11) gebunden ist, wobei in der (den) Bindungszone(n) (16, 20) zwischen diesen Schichten (11, 12, 19) auftretende spröde Verbindungen zwischen Bestandteilen der Trägerschicht (11) und/oder Haftvermittlerschicht (19) und/oder Bestandteilen der Funktionsschicht (12) nur einen begrenzten Teil der Verbindungsfläche(n) (16, 20) zwischen den Schichten (11, 12, 19) und auch nur kleine, begrenzte Bereiche (17) innerhalb der jeweiligen Verbindungsfläche (16, 20) einnehmen.

16. Schichtwerkstoff oder Schichtwerkstück nach Anspruch 15 dadurch gekennzeichnet, daß mindestens eine der jeweils an einer Bindungszone (16, 20) beteiligten Schichten (11, 12, 19) unterschiedliche metallische Bestandteile aufweist und/oder diese Schichten (11, 12, 19) zueinander unterschiedliche metallische Bestandteile aufweisen, und zwar solche unterschiedlichen metallische Bestandteile, die exotherm miteinander reagieren, wobei durch solche Reaktionen entstandene, spröde intermetallische Verbindungen nur kleine begrenzte Bereiche innerhalb diese Bindungszonen bilden.

17. Schichtwerkstoff oder Schichtwerkstück nach Anspruch 16, dadurch gekennzeichnet, daß eine durch Luftplasmaspritzen angebrachte Haftvermittlerschicht (19) aufgebracht ist, die metallische Bestandteile enthält, die untereinander und/oder mit metallischen Bestandteilen der Trägerschicht (11) und/oder metallischen Bestandteilen der Funktionsschicht (12) exotherm reagieren.

18. Schichtwerkstoff oder Schichtwerkstück nach Anspruch 15 oder 16, dadurch gekennzeichnet, daß eine Haftvermittlerschicht in Art eines Rauhgrundes aus auf die Oberfläche der Trägerschicht aufgesinterten, in der Bindungszone in die Funktionsschicht eingelagerten Teilchen gebildet ist, wobei diese Teilchen metallische Bestandteile aufweisen können, die exotherm miteinander und/oder mit metallischen Bestandteilen der Trägerschicht und/oder mit metallischen Bestandteilen der Funktionsschicht exotherm reagieren können.

19. Schichtwerkstoff oder Schichtwerkstück nach Anspruch 17 oder 18, dadurch gekennzeichnet, daß eine Haftvermittlerschicht (19) Aufgebracht ist, die Molybdän und/oder Nickel-Aluminid und/oder Nickel/Chrom-Legierung und/oder Nickel/Kupfer-Legierung und/oder Reinaluminium und/oder Aluminiumlegierung enthält.

20. Schichtwerkstoff oder Schichtwerkstück nach einem der Ansprüche 15 bis 19, dadurch gekennzeichnet, daß die Trägerschicht (11) den Rücken und die Funktionsschicht (12) die Gleitschicht von Zweischicht-Gleitlagern bilden, wobei die Trägerschicht (11) aus Stahl, vorzugsweise beruhigtem Stahl, oder Aluminiumlegierung und die Funktionsschicht (12) aus einer Dispersionslegierung bestehen, deren Matrix (13) mindestens einen der folgenden metallischen Bestandteile: Aluminium, Kupfer, Zink und deren Dispersionselemente mindestens einen der folgenden Bestandteile: Blei, Zinn, Wismut, Molybdän, Molybdänsulfid, Bornitrid, Kohlenstoff, für tribologische Zwecke anwendbare Kunststoffe, aufweisen.

21. Schichtwerkstoff oder Schichtwerkstück nach Anspruch 20, dadurch gekennzeichnet, daß die Funktionsschicht (12) eine metallische Matrix (13) auf Aluminium-Basis oder Kupferbasis und als Dispersionselemente in sehr feiner Verteilung in die Matrix (13) eingelagerte Bleiteilchen (14) in einem Gewichtsanteil zwischen 6% und 40%, vorzugsweise zwischen 6% und 15%, der Funktionsschicht aufweist.

22. Schichtwerkstoff oder Schichtwerkstück nach einem der Ansprüche 15 bis 21, dadurch gekennzeichnet, daß zusätzlich Hartteilchen (15, 21) in Größe zwischen etwa 10 $\mu$m und 200 $\mu$m in die Matrix (13) der Funktionsschicht (12) eingelagert sind.

23. Schichtwerkstoff oder Schichtwerkstück nach Anspruch 22, dadurch gekennzeichnet, daß die zusätzlich in die Matrix (13) eingelagerten Hartteilchen (15) solche auf der Basis von Laves-Phasen ($AB_2$) sind, wobei das Radius-Verhältnis der A-Atome und B-Atome

$$r_A/r_B = 1,225$$

beträgt.

24. Schichtwerkstoff oder Schichtwerkstück nach Anspruch 22 oder 23, dadurch gekennzeichnet, daß die zusätzlich in die Matrix (13) eingelagerten Hartteilchen (15, 21) solche aus der Gruppe der Stoffe TiC, WC, Glasmehl, $Si_3N_4$,

SiC, $Al_2O_3$ sind.

## Claims

1. Method for the manufacture of multilayer material or multilayer parts in which the functional layer is formed of a metallic dispersion alloy or {with} other structure usable for tribological purposes by air plasma spraying from a fine powder, the functional layer being applied as a dispersion alloy or {with} other structure usable for tribological purposes by air plasma spraying directly on to the surface of the backing layer or a previously made bonding layer, and immediately after the air plasma spraying the layers are cooled from the side of the backing layer while maintaining a high cooling rate which is just permissible having regard to the shrinking properties of the backing layer, of the bonding layer and the formed functional layer and their mutual binding zones, characterised in that the distance of the plasma flame from the surface of the backing layer or bonding layer to be coated is set, and during the spraying maintained, to be so large, in agreement with the available device output and the kind of the powder processed at the time, that the backing layer or bonding layer is on the surface to be coated heated to a depth of the order of only several layers of atoms or molecules of the layers to such an extent, that the supplied thermal energy and the energy released during the impact of the particles carried in the plasma stream cause local melting of the surface of the backing or bonding layer such that narrowly delimited regions (17) of brittle components are produced which are surrounded by regions (16) of increased diffusion of the particles carried in the plasma stream [which are transported] into the uppermost layers of atoms or molecules of the backing or bonding layer.

2. Method according to claim 1, characterised in that the functional layer is formed by air plasma spraying from a powder mixture which contains the meltable matrix components and the components to be distributed in the matrix which are not soluble in its material or are in it soluble only in an amount which is smaller than the available one.

3. Method according to claim 1 or 2, characterised in that the functional layer is formed by air plasma spraying from a powder (micropellets), agglomerated with or without an organic binder, the powder containing meltable matrix components and components which are to be distributed in the matrix and which are not soluble in its material or are soluble in it only in an amount which is smaller than the available one.

4. Method according to claim 2 or 3, characterised in that the powder mixture or powder agglomerate contains powder particles provided with coating.

5. Method according to any one of claims 1 to 4, characterised in that the powders of different kind are brought into the plasma flame possibly at different places.

6. Method according to any one of claims 1 to 5, characterised in that additionally hard particles the size of which is between about 10 $\mu$m and 200 $\mu$m are brought into the plasma flame to be embedded in the functional layer being formed, the hard particles being of one or more materials from the group TiC, WC, glass powder $Si_3N_4$, SiC, $Al_2O_3$ and or hard particles based on Laves phases ($AB_2$), the radius ratio of the A-atoms and B-atoms being $r_A/r_B = 1.225$.

7. Method according to any one of claims 1 to 6, characterised in that the functional layer of a dispersion alloy with a metallic matrix of one or more of the metals: aluminium, copper, zinc, silver and dispersion elements of one or more of the components lead, tin, bismuth, nickel, copper, manganese, silicon, carbon, molybdenum sulphide, boron nitride, plastics usable for tribological purposes, is applied by air plasma spraying onto a backing layer containing iron and cooling is performed during that process at a cooling rate between $10^2$ K/s to $5 \times 10^2$ K/s.

8. Method according to any one of claims 1 to 7, characterised in that before the application of the functional layer a bonding layer in the manner of a rough base is sintered as one or more layers of fine particles onto the surface of the backing layer to be coated .

9. Method according to any one of claims 1 to 7, characterised in that first a bonding layer is applied by air plasma spraying onto the surface of the backing layer to be coated with the functional layer and cooling is performed during that process and/or immediately afterwards while a cooling rate of at least $0.2 \times 10^3$ K/s is maintained.

10. Method according to claim 8 or 9, characterised in that a bonding layer is applied which contains metallic components which react exothermically with each other and/or with metallic components of the backing layer and/or with metallic components of the functional layer to be applied thereon.

11. Method according to claim 10, characterised in that a bonding layer is applied composed of one or more of the following substances: molybdenum, nickel/aluminium alloy, nickel/chromium alloy, nickel/copper alloy, pure aluminium, aluminium alloy.

12. Method according to any one of claims 1 to 11, characterised in that a strip forming the backing layer is continuously coated with the functional layer and, during and/or immediately after the coating by air plasma spraying, is pulled by its uncoated side over a cooling roller while heat transmitting contact is being maintained.

13. Method according to any one of claims 1 to 11, characterised in that a strip forming the backing layer is continuously coated by air plasma spraying with the functional layer and during and/or immediately after the coating is pulled by its uncoated side over a cooling box in which liquid and/or gaseous cooling medium is supplied to the uncoated surface of the backing layer.

14. Method according to claim 12 or 13, characterised in that additionally gaseous cooling medium is supplied to the freshly formed functional layer.

15. Multilayer material or part obtainable by the method according to any one of Claims 1 to 14 comprising a functional layer, particularly an overlay, applied on one surface of a firm backing layer, for instance {as} a dispersion layer with a matrix with at least a meltable component and dispersion elements which at least in solid state are not soluble in the material of the matrix or are in it soluble only in an amount which is smaller than the available one, or {of} another mixture, usable for tribological purposes, of components which are either not soluble in each other or are in each other soluble in an amount smaller the available one, characterised in that the functional layer (12) is made with a matrix (13), the former being formed by air plasma spraying from a fine powder containing the meltable components of the matrix and the undissolved components distributed in the matrix, in which are formed dispersion elements as very finely distributed particles (14) of components which are not soluble in the material of the matrix or are in it soluble only in an amount which is smaller than the available one, the functional layer being bonded either directly or via a bonding layer (19) to the surface of the backing layer (11), while brittle components present in the binding zone(s) (16, 20) between these layers (11, 12, 19) occupy between the components of the backing layer (11) and/or binding layer (19) and/or components of the functional layer (12) only a limited part of the connection area-(s) (16, 20) between the layers (11, 12, 19) and also only small limited areas (17) within the relevant connection area (16, 20).

16. Multilayer material or parts according to Claim 15, characterised in that at least one of the layers (11, 12, 19), participating always in a binding zone (16, 20), contains different metallic components and/or these layers (11, 12, 19) contain mutually different metallic components, namely such different metallic components which react exothermically with each other, while brittle intermetallic components produced by such reactions form only small limited regions within these binding zones.

17. Multilayer material or parts according to Claim 16, characterised in that a bonding layer (19) is applied by air plasma spraying, which contains metallic components which react exothermically with each other and/or with the metallic components of the backing layer (11) and/or the metallic components of the functional layer (12).

18. Multilayer material or parts according to Claim 15 or 16, characterised in that a bonding layer in the form of a rough ground is formed of particles sintered onto the surface of the backing layer and embedded in the binding zone into the functional layer, while these particles may contain metallic components which may react exothermically with each other and/or with the metallic components of the backing layer and/or with the metallic components of the functional layer.

19. Multilayer material or parts according to Claim 17 or 18, characterised in that a bonding layer (19) is applied which contains molybdenum and/or nickel-aluminid and/or a nickel-chromium alloy and/or a nickel-copper alloy and/or pure aluminium and/or an aluminium alloy.

**20.** Multilayer material or parts according to any one of Claims 15 to 19, characterised in that the backing layer (11) forms the back and the functional layer (12) forms the overlay of a two-layer plain bearing, while the backing layer (11) is of steel, preferably killed steel, or an aluminium alloy, and the functional layer (12) is of a dispersion alloy, the matrix (13) of which contains at least one of the following metallic components: aluminium, copper, zinc, and the dispersion elements of which contain at least one of the following components: lead, tin, bismuth, molybdenum, molybdenum sulphide, boron nitride, carbon, plastics usable for tribological purposes.

**21.** Multilayer material or parts according to Claim 20, characterised in that the functional layer (12) contains a metallic matrix (13) based on aluminium or copper and lead particles (14) embedded as dispersion elements in a very fine distribution in the matrix (13), the proportion by weight of the particles being between 6% and 40%, preferably between 6% and 15%, of the functional layer.

**22.** Multilayer material or parts according to any one of Claims 15 to 21, characterised in that additionally hard particles (15, 21) of a size between 10 $\mu$m and 200 $\mu$m are embedded in the matrix (13) of the functional layer (12).

**23.** Multilayer material or parts according to Claim 22, characterised in that the hard particles (15), embedded additionally in the matrix (13), are particles based on Laves phases ($AB_2$), the radius ratio of the A-atoms and B-atoms being $r_A/r_B = 1.225$.

**24.** Multilayer material or parts according to Claim 22 or 23, characterised in that the hard particles (15, 21), embedded additionally in the matrix (13), are particles of materials from the group of substances: TiC, WC, glass powder $Si_3N_4$, SiC, $Al_2O_3$.

**Revendications**

**1.** Procédé pour produire un matériau stratifié ou des pièces stratifiées, selon lequel la couche fonctionnelle est formée à partir d'un alliage métallique en dispersion ou bien, en ayant une autre structure applicable à des fins tribologiques, par pulvérisation de plasma dans de l'air, à partir d'une poudre fine, procédé dans lequel la couche fonctionnelle sous forme d'un alliage en dispersion ou ayant une autre structure applicable à des fins tribologiques est appliquée directement par pulvérisation de plasma dans l'air sur la surface de la couche de support ou sur une couche d'un adjuvant d'adhérence formée au préalable, et selon lequel, immédiatement après la pulvérisation par plasma d'air, les couches sont refroidies à partir du côté de la couche de support avec maintien d'une vitesse élevée de refroidissement, encore tolérable du point de vue des propriétés de retrait ou d'affaissement de la couche de support, de la couche d'adjuvant d'adhérence et de la couche fonctionnelle formée ainsi que de leurs zones mutuelles de liaison, procédé caractérisé en ce que la distance de la flamme de plasma par rapport à la surface à revêtir de la couche de support ou de la couche d'adjuvant d'adhérence est réglée et maintenue, pendant l'opération de pulvérisation, en fonction de la capacité disponible des installations et de la nature de la poudre à mettre en oeuvre et à transformer à chaque fois, à une valeur assez grande pour que la couche de support ou la couche d'adjuvant d'adhérence ne soit chauffée, à la surface à revêtir, qu'à une profondeur correspondant à un ordre de grandeur d'un petit nombre d'atomes ou de molécules seulement des couches, de sorte que l'énergie thermique apportée et l'énergie libérée lors du choc des particules entraînées dans le rayon de plasma provoquent une fusion locale à la surface de la couche de support ou de la couche d'adjuvant d'adhérence, de sorte qu'il en résulte des domaines étroitement limités de liaisons cassantes qui sont entourées par des domaines (16) de diffusion renforcée des particules, entraînées par le rayon de plasma, dans les couches supérieures d'atomes ou de molécules de la couche de support ou de la couche d'adjuvant d'adhérence .

**2.** Procédé selon la revendication 1, caractérisé en ce que la couche fonctionnelle est formée, par pulvérisation d'un plasma d'air à partir d'une quantité de poudre contenant les constituants de matrice à faire fondre et les parties de constituants à répartir dans la matrice, parties qui sont insolubles dans le matériau ou qui n'y sont solubles qu'en une quantité plus faible que celle déjà présente.

**3.** Procédé selon la revendication 1 ou 2, caractérisé en ce que la couche fonctionnelle est formée par pulvérisation, à l'aide d'un plasma d'air, d'une poudre agglomérée avec ou sans liant organique ("micro-pastilles"), qui contient les constituants de matrice à faire fondre et les constituants à répartir dans la matrice, insolubles dans le matériau ou qui n'y sont solubles qu'en une quantité plus faible que celle déjà présente.

4. Procédé selon la revendication 2 ou 3 caractérisé en ce que la quantité de poudre ou l'agglomérat de poudre contient des particules de poudre munies d' une enveloppe d'enrobage.

5. Procédé selon l'une quelconque des revendications 1 à 4, caractérisé en ce qu'à la flamme du plasma sont éventuellement amenées, en des endroits séparés, des poudres de nature différente.

6. Procédé selon l'une quelconque des revendications 1 à 5, caractérisé en ce qu'à la flamme de plasma sont acheminées en outre des particules dures dont la grosseur se situe entre environ 10 $\mu$m et 200 $\mu$m, destinées à s'enfoncer dans la couche fonctionnelle à former, ces particules dures étant formées d'une ou plusieurs matières choisies dans l'ensemble formé par TiC, WC, de la farine de verre, $Si_3N_4$, SiC, $Al_2O_3$ et/ou des particules dures à base de phases de lave ($AB_2$), le rapport entre les rayons des atomes A et des atomes B étant de :

$$r_A/r_B = 1,225$$

7. Procédé selon l'une quelconque des revendications 1 à 6, caractérisé en ce que la couche fonctionnelle est appliquée par pulvérisation par plasma d'air, à partir d'un alliage en dispersion comportant une matrice métallique formée d'un ou plusieurs des métaux: aluminium, cuivre, zinc, argent et des éléments en dispersion d'une ou plusieurs des parties constitutives : plomb, étain, bismuth, nickel, cuivre , manganèse, silicium, carbone, sulfure de molybdène, nitrure de bore, des matières plastiques applicables à des fins tribologiques , sur une couche de support contenant du fer, le refroidissement étant réalisé à une vitesse comprise entre $10^2$ K/s et $5.10^2$ K/s.

8. Procédé selon l'une quelconque des revendications 1 à 7, caractérisé en ce qu'une couche d'adjuvant d'adhérence, sous forme d'un fond d'apprêt rugueux, est appliquée par frittage d'une ou d'un petit nombre de petites couches de fines particules sur la surface à revêtir de la couche de support , avant l'application de la couche fonctionnelle.

9. Procédé selon l'une quelconque des revendications 1 à 7, caractérisé en ce que tout d'abord une couche d'adjuvant d'adhérence est appliquée, par pulvérisation à l'aide d'un plasma d'air, sur la surface de la couche de support à revêtir de la couche fonctionnelle, et pendant cette application et/ou immédiatement ensuite, un refroidissement est appliqué avec maintien d'une vitesse de refroidissement d'au moins $0,2. 10^3$ K/s.

10. Procédé selon la revendication 8 ou 9, caractérisé en ce qu'est appliquée une couche d'adjuvant d'adhérence, contenant des constituants métalliques qui subissent une réaction exothermique les uns avec les autres et/ou avec des constituants métalliques de la couche de support et/ou avec des constituants métalliques de la couche fonctionnelle appliquée par la suite.

11. Procédé selon la revendication 10, caractérisé en ce qu'est appliquée une couche d'adjuvant d'adhérence formée d'une ou plusieurs des substances suivantes : le molybdène, un alliage nickel/aluminium, un alliage nickel/chrome, un alliage nickel/cuivre, de l'aluminium pur, un alliage d'aluminium.

12. Procédé selon l'une quelconque des revendications 1 à 11, caractérisé en ce qu' une bande formant la couche de support est continuellement revêtue de la couche fonctionnelle et, pendant le revêtement par pulvérisation à l'aide d'un plasma d'air, et/ou immédiatement après ce revêtement, le côté non revêtu de la bande est tiré sur un cylindre de refroidissement, avec maintien d'un contact conducteur de chaleur.

13. Procédé selon l'une quelconque des revendications 1 à 11, caractérisé en ce qu'une bande formant la couche de support est continuellement revêtue, par pulvérisation à l'aide d'un plasma d'air, par la couche fonctionnelle, et, pendant ce revêtement et/ou immédiatement après lui, le côté non revêtu de cette bande est tiré de façon à passer par un caisson de refroidissement dans lequel un milieu liquide et/ou gazeux de refroidissement est acheminé sur la surface non revêtue de la couche de support.

14. Procédé selon la revendication 12 ou 13, caractérisé en ce que du milieu gazeux supplémentaire de refroidissement est acheminé sur la couche fonctionnelle fraichement formée.

15. Matériau stratifié ou pièce stratifiée , que l'on peut obtenir par le procédé selon l'une quelconque des revendications 1 à 14, cette pièce ou ce matériau comportant une couche fonctionnelle appliquée sur une surface d'une couche de support solide, notamment une couche de glissement, par exemple sous forme d'une couche de dispersion solide, comportant une matrice ayant au moins un constituant fusible et des éléments en dispersion qui, au moins à l'état solide, sont insolubles dans le matériau de la matrice ou n'y sont solubles qu'en une quantité inférieure à celle déjà présente, ou couche formée d'un autre mélange, applicable à des fins tribologiques, de constituants qui ne sont pas mutuellement solubles ou qui ne le sont qu'en une quantité inférieure à celle déjà présente, matériau ou pièce caractérisé(e) en ce que la couche fonctionnelle (12) formée par pulvérisation, à l'aide d'un plasma d'air, des constituants fusibles de la matrice et de la fine poudre contenant des constituants non dissous et répartis dans la matrice, est formée d'une matrice (13) dans laquelle les éléments en dispersion sont présents sous forme de particules (14) très finement réparties de constituants insolubles dans le matériau de la matrice ou qui n'y sont solubles qu'en une quantité inférieure à celle déjà présente, cette matrice étant appliquée, directement ou par l'intermédiaire d'une couche d'adjuvant d'adhérence (19) à la surface de la couche (11) de support, et les liaisons fragiles ou cassantes de connection apparaissant dans la ou les zones de liaison (16,20) entre ces couches (11,12,19), entre des parties constitutives de la couche (11) de support et/ou de la couche (19) d'adjuvant d'adhérence et/ou des parties constitutives de la couche fonctionnelle (12) n'occupent qu'une partie limitée de la ou des surfaces de liaison (16,20) entre les couches (11,12,19) et n'occupent également que de petits domaines (17) limités à l'intérieur de chaque surface (16, 20) de liaison.

16. Matériau stratifié ou pièce stratifiée, selon la revendication 15, caractérisé(e) en ce qu'au moins l'une des couches (11, 12, 19), participant à chaque fois à une zone de liaison (16, 20), présente des constituants métalliques différents et/ou ces couches (11, 12, 19) présentent des constituants métalliques différents d'une couche à l'autre, et en ce qu'il s'agit de constituants métalliques différents, qui réagissent mutuellement avec un dégagement de chaleur, les liaisons intermétalliques fragiles ou cassantes résultant de telles réactions ne formant que de petits domaines limités à l'intérieur de ces zones de liaison.

17. Matériau stratifié ou pièce stratifié(e) selon la revendication 16, caractérisé(e) en ce qu'une couche (19) d'adjuvant d'adhérence, appliquée à l'aide d'une pulvérisation par plasma d'air, est appliquée et contient les constituants métalliques qui réagissent, avec dégagement de chaleur, les uns sur les autres et/ou avec des constituants métalliques de la couche (11) de support et/ou avec des constituants métalliques de la couche fonctionnelle (12).

18. Matériau stratifié ou pièce stratifié(e) selon la revendication 15 ou 16, caractérisé(e) en ce qu'une couche d'adjuvant d'adhérence, du genre d'une couche d'apprêt ou de base rugueuse, est formée par des particules frittées à la surface de la couche de support, implantées dans la zone de liaison dans la couche fonctionnelle, ces particules pouvant présenter des constituants métalliques capables de réagir avec dégagement de chaleur les uns avec les autres et/ou avec des constituants métalliques de la couche de support et/ou avec des constituants métalliques de la couche fonctionnelle.

19. Matériau stratifié ou pièce stratifié(e) selon la revendication 17 ou 18, caractérisé(e) en ce qu'est appliquée une couche (19) d'adjuvant d'adhérence qui contient du molybdène et/ou de l'aluminiure de nickel et/ou un alliage nickel/chrome et/ou un alliage nickel/cuivre et/ou de l'aluminium pur et/ou un alliage d'aluminium.

20. Matériau stratifié ou pièce stratifié(e) selon l'une des revendications 15 à 19, caractérisé(e) en ce que la couche de support (11) forme le dos et la couche fonctionnelle (12) forme la couche de glissement de paliers lisses à deux couches, la couche de support (11) consistant en de l'acier, avantageusement de l'acier calmé, ou en de l'alliage d'aluminium et la couche fonctionnelle (12) consistant en un alliage en dispersion, dont la matrice (13) présente au moins l'un des constituants métalliques suivants: aluminium, cuivre, zinc, et leurs éléments en dispersion présentent au moins l'un des constituants suivants : plomb, étain, bismuth, molybdène, sulfure de molydène, nitrure de bore, carbone, matière synthétique ou plastique applicable à des fins tribologiques.

21. Matériau stratifié ou pièce stratifiée selon la revendication 20, caractérisé(e) en ce que la couche fonctionnelle (12) présente une matrice (13) métallique à base d'aluminium ou à base de cuivre et, comme éléments en dispersion en très fine répartition dans la matrice (13), des particules de plomb (14) implantées en une proportion pondérale comprise entre 6 % et 40 %, avantageusement entre 6 % et 15 % de la couche fonctionnelle.

22. Matériau stratifié ou pièce stratifiée selon l'une des revendications 15 à 21, caractérisé(e) en ce que des particules dures (15, 21), ayant une grosseur comprise entre environ 10 $\mu$m et 200 $\mu$m, sont implantées en outre dans la matrice (13) de la couche fonctionnelle (12).

23. Matériau stratifié ou pièce stratifiée selon la revendication 22, caractérisé(e) en ce que les particules dures implantées en outre dans la matrice (13) sont des particules à base de phase de lave ($AB_2$), le rapport entre les rayons des atomes A et des atomes B valant:

$r_A/r_B = 1,225$

24. Matériau stratifié ou pièce stratifiée selon les revendications 22 ou 23, caractérisé(e) en ce que les particules dures (15, 21) implantées en outre dans la matrice (13) sont les particules choisies dans le groupe ou ensemble des matières TiC, WC, de la farine de verre, $Si_3N_4$, SiC, $Al_2O_3$.

Fig. 1

Fig. 2

Fig: 3

Fig. 4